(19) Europäisches Patentamt
European Patent Office
Office européen des brevets

(11) **EP 3 450 988 B1**

(12) **EUROPEAN PATENT SPECIFICATION**

(45) Date of publication and mention
of the grant of the patent:
**05.10.2022 Bulletin 2022/40**

(21) Application number: **18187682.2**

(22) Date of filing: **07.08.2018**

(51) International Patent Classification (IPC):
**G01P 3/49** (2006.01)    **G01B 7/14** (2006.01)
**G01P 3/50** (2006.01)

(52) Cooperative Patent Classification (CPC):
**G01P 3/49; G01P 3/505;** G01B 7/14

(54) **SPEED DETECTING DEVICE AND METHOD**

GESCHWINDIGKEITSDETEKTIONSVORRICHTUNG UND -VERFAHREN

DISPOSITIF ET PROCÉDÉ DE DÉTECTION DE VITESSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.08.2017  JP 2017152723**

(43) Date of publication of application:
**06.03.2019 Bulletin 2019/10**

(73) Proprietor: **Nabtesco Corporation
Tokyo 102-0093 (JP)**

(72) Inventors:
• **FLANKL, Michael
8092 Zürich (CH)**
• **TUEYSUEZ, Arda
8092 Zürich (CH)**
• **KOLAR, Johann W.
8092 Zürich (CH)**
• **TSUKADA, Yusuke
Kobe-shi, Hyogo 651-2271 (JP)**
• **NAKAMURA, Kazuhito
Chiyoda-ku, Tokyo 102-0093 (JP)**

(74) Representative: **Grünecker Patent- und
Rechtsanwälte
PartG mbB
Leopoldstraße 4
80802 München (DE)**

(56) References cited:
DE-A1- 19 538 575        JP-A- H08 211 084
JP-A- H08 211 085        JP-A- 2007 078 558
JP-A- 2008 256 718       JP-B2- 3 307 170
US-A- 3 786 354          US-A- 5 939 879
US-A1- 2015 028 859

• **TUYSUZ ARDA ET AL: "Eddy-current-based
contactless speed sensing of conductive
surfaces", 2016 IEEE 2ND ANNUAL SOUTHERN
POWER ELECTRONICS CONFERENCE (SPEC),
IEEE, 5 December 2016 (2016-12-05), pages 1-6,
XP033059684, DOI: 10.1109/SPEC.2016.7846171
[retrieved on 2017-02-07]**
• **HORST RUDOLF LOOS: "Function and
computation of transducers for the contact free
measurement of distance on the basis of the eddy
current effect", TECHNISCHES MESSEN ATM,,
vol. 43, no. 7/8, 1 January 1976 (1976-01-01),
pages 229-235, XP001420258,**
• **TIM HITZ ET AL: "True Position Measurement
with Eddy Currrent Technology", INTERNET
CITATION, November 1997 (1997-11), pages 1-11,
XP002512238, Retrieved from the Internet:
URL:http://www.sensorsmag.com/sensors/Tech
nology+Tutorials%2FSensors%2FPosition%2FP
r
esence%2FProximity/True-Position-Measureme
nt-with-Eddy-Current-Techno/ArticleStandar
d/Article/detail/323185 [retrieved on 2009-01-27]**

EP 3 450 988 B1

## Description

### TECHNICAL FIELD

The present invention relates to a speed detecting device according to the preamble of independent claims 1 or 2 , and a speed detecting method according to the preamble of independent claims 7 or 8.

### BACKGROUND

In accordance with JP 2007 078558 A, a moving distance measuring device for measuring the relative moving distance of a moving body to a conductive structure comprises an excitation coil for movement detection moving together with the moving body and being excited by an alternating voltage. Furthermore, this known measuring device comprises at least two detection coils being arranged on the front and back in the movement direction of the excitation coil for movement detection and also moving together with the moving body.

JP H08 211084 A discloses a velocity measuring device for detecting the flow velocity of a high-temperature object, such as molten metal, in a non-contact manner. This known measuring device comprises an E-shaped magnetic core with a pair of windings for detecting magnetic fluxes of the same directions being wound around the right and left legs of the core. The flow velocity of the object is measured based on the difference of output voltages from the two windings.

The sensor described in the article Tuyuz Arda et al, "Eddy-current based contactless speed sensing of conductive surfaces", 2016 IEEE 2nd Annual Southern Power Electronics Conference (SPEC), uses an injection coil to induce eddy currents in a mover whose speed is to be detected, and two differentially wound pick-up coils to detect the speed-dependent deformation of the eddy-current field. Two-dimensional finite-element method (2-D FEM) is used for modeling the system and optimizing the sensor geometry as well as the injection frequency.

From DE 195 38 575 A1, it is known to determine a gap between an excitation coil and a conductive object based on measuring voltage and current signals on said excitation coil. In detail, this document teaches an inductive proximity sensor for measuring the distance (gap) between a sensor coil and a conductive object. By supplying the sensor coil with an alternating current or an alternating voltage, the sensor coil generates a high frequency electromagnetic field. This field is affected by the conductive object so that the impedance of the sensor coil changes and this change of impedance serves as a measure of the gap.

US 2012/028859 A1 concerns a magnetic based contactless measuring sensor and a magnetic based contactless measuring method allowing contactless measuring without the need of pre-processing the sensing object. A magnetic field generating unit generates a magnetic field towards an object, while a magnetic field detector unit detects the magnetic field. An evaluating unit evaluates a signal strength of a signal being representative for the detected magnetic field and determines a respective distance, motion, speed, applied torque and applied force based on the signal.

The article Horst Rudolf Loos, "Function and computation of transducers for the contact free measurement of distance on the basis of the eddy current effect", Technisches Messen ATM, vol. 43, no.7/8, teaches to use the Q factor of a sensor coil as a basis for determining a gap change. In a tuned circuit, the Q factor (or Quality factor) corresponds to the frequency-dependent ratio between reactance and resistance.

According to the article Tim Hitz et al, "True Position Measurement with Eddy Current Technology", precision eddy current noncontact measuring systems have been widely used for displacement, vibration, thickness, alignment, dimensioning, and parts sorting applications. All these can be classified as variations on displacement because in each case the parameter being measured is the distance from the target to the sensor. The differences lie in the interpretation and implementation of the displacement data.

Contactless speed sensors are used in a wide range of industrial fields such as machining, assembly, and relative moving bodies. Typically, such speed sensors are based on the optical (cameras, encoders) or electromagnetic (magnetoresistive elements, Hall elements) technology. That is, a conventional speed sensor calculates a speed from a temporal change in optical or magnetic discontinuity characteristics of a relative moving body as a measurement object. For this reason, the conventional speed sensor is incapable of speed measurement with respect to a relative moving body that is completely flat and thus has no discontinuity characteristics.

Available to detect a moving speed of such a completely flat relative moving body is a speed sensor that utilizes induced power induced by an eddy current (see JP H08 233843 A and JP H08 146024 A). In this speed sensor, two detection coils are disposed on both sides of an excitation coil, and a magnetic flux produced by an eddy current generated on a relative moving body when an alternating current is passed through the excitation coil is detected by the two detection coils. Depending on a speed of the relative moving body, a difference occurs between respective induced voltages in the two detection coils, and thus a difference voltage between these induced voltages is detected and used to estimate the speed.

An eddy current generated on the relative moving body by an alternating current flowing through the excitation coil and induced voltages generated in the detection coils by a magnetic flux produced by this eddy current are not so large, and it is, therefore, desirable that a yoke be provided around the excitation coil and the detection coils so as to prevent magnetic flux leakage, thus improving magnetic efficiency.

Accurate detection of a moving speed of the relative moving body, however, requires that various conditions such as a shape of the yoke, arrangements of the excitation coil and the detection coils, and a distance to the relative moving body be optimized. For example, in a case where a gap between the excitation coil with the detection coils and the relative moving body varies, an estimation result of the moving speed of the relative moving body might be changed.

## SUMMARY

An object of the present invention is to provide a speed detecting device and a speed detecting method capable of accurately detecting a moving speed of a relative moving body even when a gap between an excitation coil with detection coils and the relative moving body varies.

This object is accomplished according to the present invention by providing a speed detecting device having the features of independent claims 1 or 2 and a speed detecting method having the features of independent claims 7 or 8. Advantageous embodiments of the present invention are disclosed in the dependent claims 3-6.

One aspect provides a speed detecting device provided with an excitation coil for generating a magnetic flux corresponding to an alternating current, a plurality of detection coils, each of the plurality of detection coils generating an induced voltage corresponding to a magnetic flux produced by an eddy current generated on a conductive relative moving body, the eddy current being generated so as to correspond to a moving speed of the relative moving body moving through the magnetic flux generated by the excitation coil, a gap estimation portion for estimating, based on a current flowing through the excitation coil and a voltage across the excitation coil, a gap between the relative moving body and the excitation coil, and a speed estimation portion for estimating, based on the gap estimated by the gap estimation portion and the induced voltage generated in each of the plurality of detection coils, the moving speed of the relative moving body.

The gap estimation portion may estimate the gap based on a comparison between an inductance of the excitation coil calculated based on the current and the voltage and an inductance of the excitation coil corresponding to a preset reference value of the gap. The gap estimation portion may estimate the gap based on a comparison between an impedance of the excitation coil calculated based on the current and the voltage and an impedance of the excitation coil corresponding to a preset reference value of the gap.

In a case where the relative moving body is formed of a magnetic material, the gap estimation portion may use the inductance to estimate the gap.

The gap estimation portion may estimate the gap based on a phase difference between the current and the voltage.

The gap estimation portion may include a storage portion storing a correlation between the gap and the phase difference and acquire, from the storage portion, a value of the gap corresponding to the phase difference detected by the phase difference detection portion.

In a case where the relative moving body is formed of a non-magnetic material, the gap estimation portion may use the phase difference detection portion to estimate the gap.

There may be provided a current control portion for alternately providing a first period in which a current is passed through the excitation coil and a second period in which no current is passed therethrough and setting the first period to be equal to or longer than a length of time required for the speed estimation portion to estimate the moving speed of the relative moving body.

The speed estimation portion may estimate the moving speed of the relative moving body after a lapse of a predetermined time from a start of the first period.

There may be provided a first resonance circuit including the excitation coil, the first resonance circuit resonating at a frequency of the alternating current.

There may be provided a second resonance circuit including the plurality of detection coils, the second resonance circuit resonating at a resonance frequency equal to the frequency of the alternating current.

The alternating current may have a frequency different from a frequency band of environmental noise around the relative moving body, the environmental noise including vibrations of a device including the relative moving body.

There may be provided an environmental noise detection portion for detecting environmental noise around the relative moving body and an excitation frequency adjustment portion for adjusting the frequency of the alternating current to a frequency different from a frequency band of the environmental noise detected by the environmental noise detection portion.

A configuration may be adopted in which the relative moving body is a wheel of a train, and the alternating current has a frequency different from a vibration frequency band of the train which is determined beforehand.

The alternating current may have a sinusoidal waveform.

A configuration may be adopted in which some of the plurality of detection coils are disposed on both sides of the excitation coil in a first direction, and remaining ones of the plurality of detection coils are disposed on both sides of the excitation coil in a second direction intersecting the first direction.

One embodiment provides a speed detecting method including steps of causing each of a plurality of detection coils to generate an induced voltage while a magnetic flux corresponding to an alternating current is generated by an excitation coil, the induced voltage corresponding to a magnetic flux produced by an eddy current generated on a conductive relative moving body, the eddy current being generated so as to correspond to a moving speed of the relative moving body moving through the magnetic flux generated by the excitation coil, estimating, based on a current flowing through the excitation coil and a voltage across the excitation coil, a gap between the relative moving body and the excitation coil, and estimating, based on the gap thus estimated and the induced voltage generated in each of the plurality of detection coils, the moving speed of the relative moving body.

According to the present invention, it is possible to accurately detect a moving speed of a relative moving body even when a gap between an excitation coil with detection coils and the relative moving body varies.

**BRIEF DESCRIPTION OF THE DRAWINGS**

Fig. 1 is a view explaining a basic principle of a speed detecting device according to an embodiment of the present invention.

Fig. 2A is a view showing a symmetric property of an eddy current.

Fig. 2B is a view showing an asymmetric property of an eddy current.

Fig. 3 is a view showing a path through which a magnetic flux produced by an eddy current passes in a case where a relative moving body is caused to move.

Fig. 4A is a waveform diagram of a difference voltage.

Fig. 4B is a waveform diagram of an output signal of a speed estimation portion.

Fig. 4C is a waveform diagram of an alternating current flowing through an excitation coil.

Fig. 5A is a view showing a speed detecting device according to a first modification example.

Fig. 5B is a view showing a speed detecting device according to a second modification example.

Fig. 6 is a view explaining the speed detecting device according to the embodiment of the present invention.

Fig. 7 is a block diagram showing an internal configuration of a gap estimation portion in a case where the relative moving body is formed of a magnetic material.

Fig. 8 is a block diagram showing an internal configuration of the gap estimation portion in a case where the relative moving body is formed of a non-magnetic material.

Fig. 9 is a graph showing a correlation among a phase difference between a voltage across the excitation coil and a current flowing through the excitation coil, a gap, and a moving speed of the relative moving body.

Fig. 10 shows graphs showing how a correlation between the difference voltage and the moving speed changes depending on the gap.

Fig. 11 shows views showing an effect of the gap related to a measurement value of the difference voltage.

Fig. 12 is a view showing one modification example of the speed detecting device in Fig. 6.

Fig. 13 is a view showing a configuration of Fig. 12 omitting the gap estimation portion.

Fig. 14 is a circuit diagram showing one example of a resonance circuit.

Fig. 15 is a view in which in addition to a circuit configuration in Fig. 14, detection coils are each also formed in a resonance circuit configuration.

Fig. 16 is a view showing a speed detecting device obtained by adding a current control portion to a configuration of Fig. 1.

Fig. 17 is a waveform diagram of an alternating current flowing through the excitation coil.

Fig. 18 is a schematic plan view, as seen from above, of a speed detecting device 1 capable of detecting a speed of a relative moving body 6 moving in a two-dimensional direction.

Fig. 19 is a view showing an example in which an excitation coil 2 in the center is formed in an annular shape and excitation coils 2 around that excitation coil 2 are each formed in a crescent shape.

DESCRIPTION OF EXAMPLE EMBODIMENTS

With reference to the appended drawings, the following describes one embodiment of the present disclosure. In the drawings appended hereto, for the sake of convenience of illustration and ease of understanding, a scale size, an aspect ratio, and so on are altered from those of real things for emphasis.

In the following description, all examples which do not comprise a gap estimation portion should be considered as background information which does not correspond to the claimed invention.

Moreover, terms and values used herein to specify a shape, a geometric condition, and an extent thereof, such as, for example, terms including "parallel," "orthogonal," "equal," and so on and values of a length and an angle, are not bound to a strict meaning thereof but should be interpreted as covering a range that can be expected to achieve similar functionality.

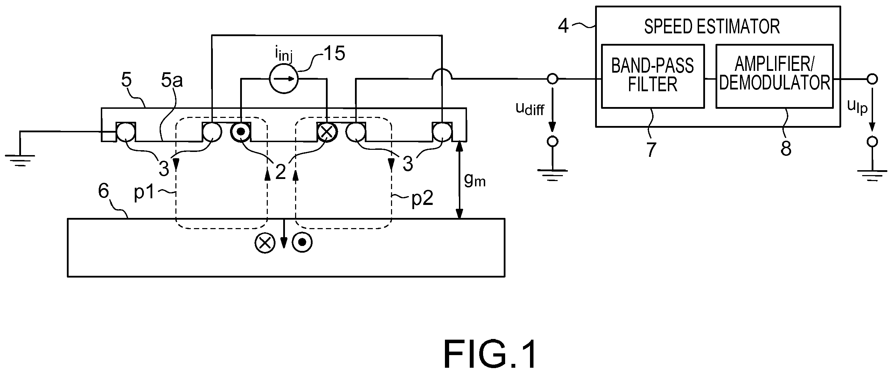

<Basic Principle> Fig. 1 is a view explaining a basic principle of a speed detecting device 1 according to an embodiment of the present invention. The speed detecting device 1 in FIG. 1 is provided with an excitation coil 2, two detection coils 3, and a speed estimation portion 4. The two detection coils 3 have equal number of turns. While the number of excitation coils 2 used and the number of detection coils 3 used are arbitrary, Fig. 1 shows an example having one excitation coil 2 and two detection coils 3. The excitation coil 2 generates a magnetic flux corresponding to an alternating current. A relative moving body 6 formed of a conductor moves through the magnetic flux. The detection coils 3 each generate an induced voltage corresponding to a magnetic flux produced by an eddy current generated on the relative moving body 6 so as to correspond to a moving speed of the relative moving body 6.

The excitation coil 2 and the two detection coils 3 are disposed at a periphery of a yoke 5. The yoke 5 is a magnetic flux-concentrating member that passes a magnetic flux therethrough in a concentrated manner, the magnetic flux being linked with the excitation coil 2 and the two detection coils 3. More specifically, the two detection coils 3 are disposed on both sides of the excitation coil 2 along one direction (a longitudinal direction) of the yoke 5. As shown in Fig. 1, the yoke 5 includes three convex portions 5a, and the excitation coil 2 and the two detection coils 3 are wound on the convex portions 5a, respectively. As will be mentioned later, a shape of the yoke 5 is arbitrary, and the yoke 5 in Fig. 1 is merely one example. The coils are wound on the convex portions 5a, respectively, and thus magnetic flux leakage can be suppressed. Furthermore, the coils 2 and 3 can be created simply by winding a copper wire on the convex portions 5a, and thus workability is improved.

The relative moving body 6 is disposed so as to be spaced by a gap from a distal end portion of each of the convex portions 5a of the yoke 5. The relative moving body 6 is a conductor. The relative moving body 6 may be formed of a magnetic material or a non-magnetic material as long as it is a conductor.

The relative moving body 6 is configured to be movable in one direction (the longitudinal direction of the yoke 5). The gap is typically an air gap and herein referred to simply as a gap. In the following description, it is assumed that the gap has a size equal to a distance between the excitation coil 2 and the relative moving body 6 and to a distance between each of the detection coils 3 and the relative moving body 6.

In performing speed detection, an alternating current having a predetermined frequency is supplied to the excitation coil 2. Equivalently, the alternating current is supplied from a current source 15 as shown in Fig. 1. By the alternating current flowing through the detection coils 3, a magnetic flux is generated and flows along paths p1 and p2 extending through the relative moving body 6, linked with the detection coils 3, and returning to the excitation coil 2, respectively. Fig. 1 shows an example in which the relative moving body 6 is stopped. In this embodiment, a current flowing in a direction from rear to front with respect to the plane of paper is indicated by "●," and a current flowing in a direction from front to rear with respect to the plane of paper is indicated by "x." Furthermore, an arrowhead of an arrow indicates a north pole side of a magnetic flux.

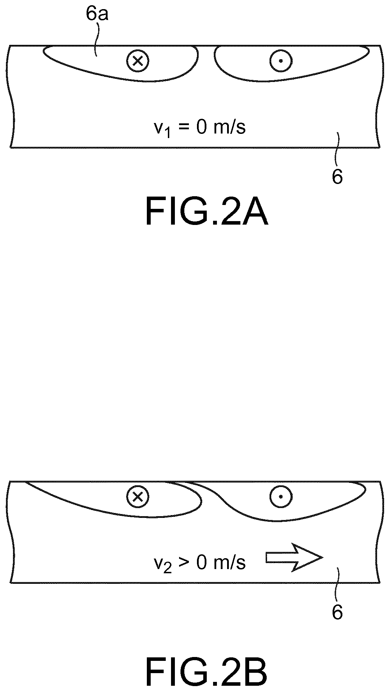

On the relative moving body 6, there is generated an eddy current produced by a magnetic flux generated by the excitation coil 2. The eddy current generates a magnetic flux in such a direction as to hinder a change in the magnetic flux generated by the excitation coil 2. The eddy current changes depending on an amplitude and a frequency of the alternating current flowing through the excitation coil 2, the gap between the excitation coil 2 and the relative moving body 6, the number of turns of the excitation coil 2, and a speed and a material of the relative moving body 6. During a time when the relative moving body 6 is stopped, as shown in Fig. 2A, the eddy current flows symmetrically on both sides of the excitation coil 2.

The magnetic flux produced by the alternating current flowing through the excitation coil 2 and the magnetic flux produced by the eddy current on the relative moving body 6 are linked with the two detection coils 3 provided on both sides of the excitation coil 2. In a state where the relative moving body 6 is stopped, the magnetic fluxes linked with the two detection coils 3, respectively, are equal in magnitude to each other, the magnetic fluxes being produced by the eddy current on the relative moving body 6. Therefore, a total amount of magnetic fluxes linked with one of the two detection coils 3 becomes equal to that of the other detection coil 3, and thus respective induced voltages in the detection coils 3 cancel out each other, so that a voltage inputted to the speed estimation portion 4 becomes zero. The speed estimation portion 4, therefore, estimates that the relative moving body 6 is stopped.

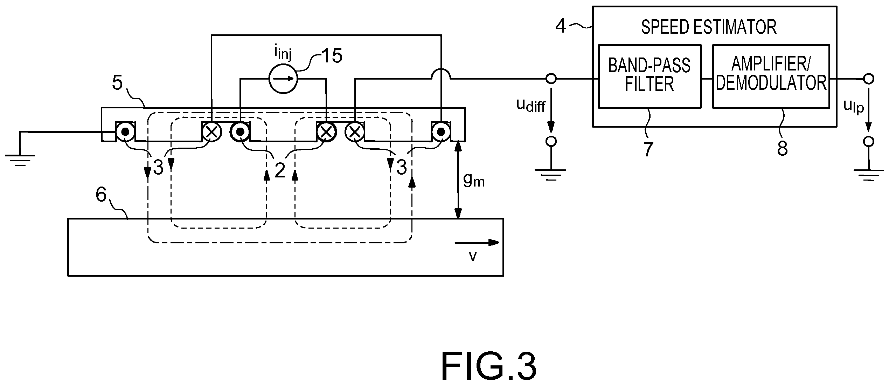

Here, as shown in FIG. 3, when the relative moving body 6 moves in an arrow direction (a rightward direction in the drawing) at a moving speed v, as shown in Fig. 2B, distortion occurs in an eddy current on the relative moving body 6. Fig. 3 shows an example in which, similarly to Fig. 1, there is generated a magnetic flux linked upward with the excitation coil 2. Such distortion in the eddy current is generated as a result of the relative moving body 6 moving through a magnetic flux generated by the excitation coil 2. Specifically, the eddy current on the relative moving body 6 is a sum of an eddy current generated by the magnetic flux of the excitation coil 2 in a state where the relative moving body 6 is stopped and an eddy current generated as a result of the relative moving body 6 moving through the magnetic flux of the excitation coil 2. The eddy current generated as a result of the relative moving body 6 moving through a magnetic field of the excitation coil 2 mainly flows immediately below the excitation coil 2 in a direction from the far side to the near side with respect to the plane of paper. A magnetic flux generated by this eddy current is linked upward with the detection coil 3 on the right disposed on a forward side in a travel direction of the relative moving body 6 and also linked downward with the detection coil 3 on the left disposed on a backward side in the travel direction of the relative moving body 6. Thus, there occurs a difference between an amount of the magnetic fluxes linked with the detection coil 3 on the forward side in the travel direction of the relative moving body 6 and an amount of the magnetic fluxes linked with the detection coil 3 on the backward side in the travel direction of the relative moving body 6, so that a difference voltage between respective induced voltages in the two detection coils 3 no longer becomes zero. As the moving speed of the relative moving body 6 becomes higher, the above-mentioned difference between the amounts of the magnetic fluxes linked with the detection coils 3, respectively, increases, so that a voltage difference occurring between the detection coils 3 increases accordingly. Therefore, based on the above-mentioned difference voltage, the speed estimation portion 4 can estimate the speed of the relative moving body 6.

As thus described, when the relative moving body 6 moves, an eddy current becomes asymmetric on the relative moving body 6 on both sides of the excitation coil 2, and this asymmetry causes a slight difference between magnetic fluxes linked with the two detection coils 3, respectively. This difference between the magnetic fluxes is detected as a difference voltage between induced voltages.

As shown in Fig. 1, the speed estimation portion 4 includes a band-pass filter 7 and an amplification/demodulation portion 8. The band-pass filter 7 eliminates noise included in a difference voltage between respective induced voltages in the two detection coils 3. Based on a voltage signal after being filtered through the band-pass filter 7, the amplification/demodulation portion 8 detects the moving speed of the relative moving body 6.

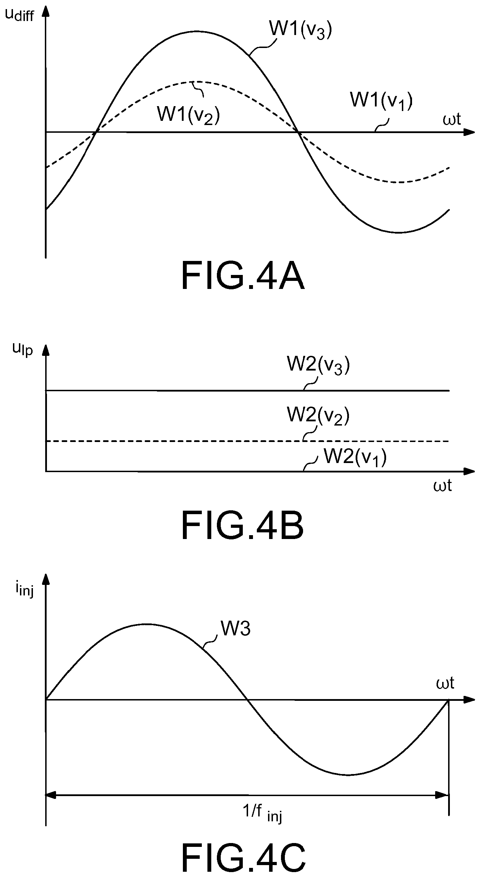

Fig. 4A is a waveform diagram of a difference voltage udiff, Fig. 4B is a waveform diagram of an output signal ulp of the speed estimation portion 4, and Fig. 4C is a waveform diagram of an alternating current iinj flowing through the excitation coil 2. A waveform w1(v1) in Fig. 4A and a waveform w2(v1) in Fig. 4B represent a state where the relative moving body 6 is stopped, a waveform w1(v2) in Fig. 4A and a waveform w2(v2) in Fig. 4B represent a state where the relative moving body 6 is moving at a slow speed v2, and a waveform w1(v3) in Fig. 4A and a waveform w2(v3) in Fig. 4B represent a state where the relative moving body 6 is moving at a high speed v3. As can be understood from these waveform diagrams, as the moving speed of the relative moving body 6 becomes higher, an amplitude of the difference voltage udiff increases, and an amplitude of an output signal of the speed estimation portion 4 also increases. Therefore, based on an amplitude of the difference voltage udiff, the speed estimation portion 4 can estimate the speed of the relative moving body 6.

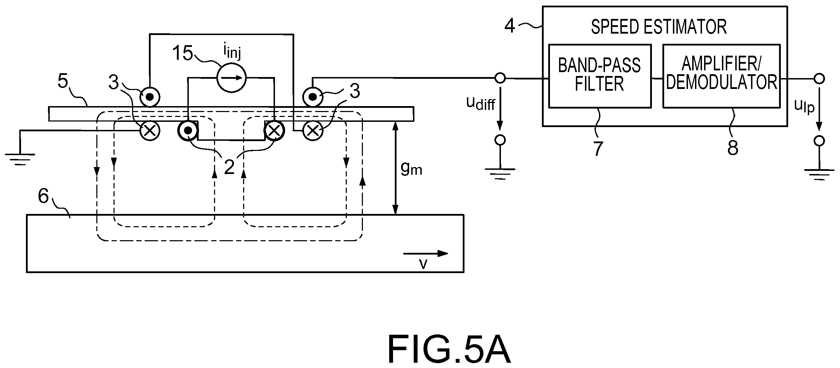

A shape of the yoke 5 and arrangements of the excitation coil 2 and the detection coils 3 are arbitrary, and various modification examples thereof are conceivable. Fig. 5A shows a speed detecting device 1 according to a first modification example. The speed detecting device 1 in Fig. 5A is provided with a T-shaped yoke 5 having a convex portion 5a in a middle portion in a longitudinal direction thereof, and an excitation coil 2 is would on the convex portion 5a. Two detection coils 3 are disposed on both sides of the excitation coil 2 and wound in a direction different by 90 degrees from a winding direction in Fig. 1. That is, the excitation coil 2 is wound on the convex portion 5a of the yoke 5 in a first width direction, and the two detection coils 3 are wound in a second width direction intersecting a first width defined by a body portion of the yoke 5. Since the detection coils 3 are wound on the body portion of the yoke 5, the body portion of the yoke 5 is formed to have a thickness reduced to such an extent that magnetic fluxes are not saturated therein, and thus it is possible to increase the number of turns of the detection coils 3 without increasing a size of the detection coils 3. This can improve detection sensitivity, and thus a change in moving speed of the relative moving body 6 can be sensitively detected. As a result, a current in the excitation coil 2 can be reduced, and power consumption can also be reduced.

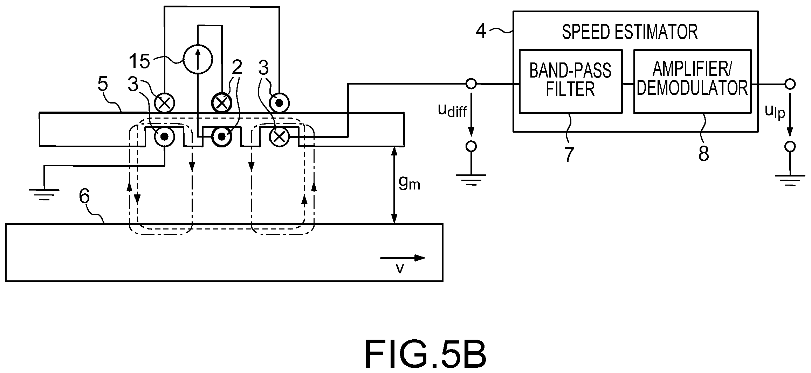

Fig. 5B shows a speed detecting device 1 according to a second modification example. Fig. 5B is different from Fig. 5A in that an excitation coil 2 is wound in a direction rotated 90 degrees. The excitation coil 2 in Fig. 5B is wound on a body portion of a yoke 5 in a second width direction thereof. In this configuration, a second width is set to be smaller than a first width, and thus a coil diameter of each of the excitation coil 2 and detection coils 3 can be made smaller than that in Fig. 1. This makes it possible to reduce a use amount of a material of each of the coils and thus to suppress a power loss due to a resistance component of each of the coils. For example, copper is used as the material of each of the coils, and the shorter a length of a wound wire of each of the coils, the less a copper loss. Furthermore, in Fig. 5B, the coils are wound directly on the body portion of the yoke 5 instead of a convex portion 5a thereof, and thus manufacturing equipment for winding a wire on the convex portion 5a is no longer needed, so that a manufacturing cost can be reduced.

For the sake of convenience, Fig. 1, Fig. 5A, and Fig. 5B show an example in which the alternating current iinj is passed from the current source 15 through the excitation coil 2. In practice, however, an alternating voltage source is connected to the excitation coil 2, and the alternating current iinj is passed therefrom through the excitation coil 2. For the sake of simplicity, herein, the description assumes that the alternating current iinj is passed from the current source 15 through the excitation coil 2.

<Feature of This Embodiment> This embodiment is intended to estimate the gap between the speed detecting device 1 and the relative moving body 6.

Detection sensitivity of a speed sensor depends on a size of the gap, the speed sensor detecting an induced voltage produced by an eddy current on the relative moving body 6 and estimating, based on a result of the detection, the moving speed of the relative moving body 6 For this reason, it is required that with respect to the gap, an induced voltage be correlated with an estimated speed of the relative moving body 6. To this end, a feature of this embodiment is to detect a size of the gap.

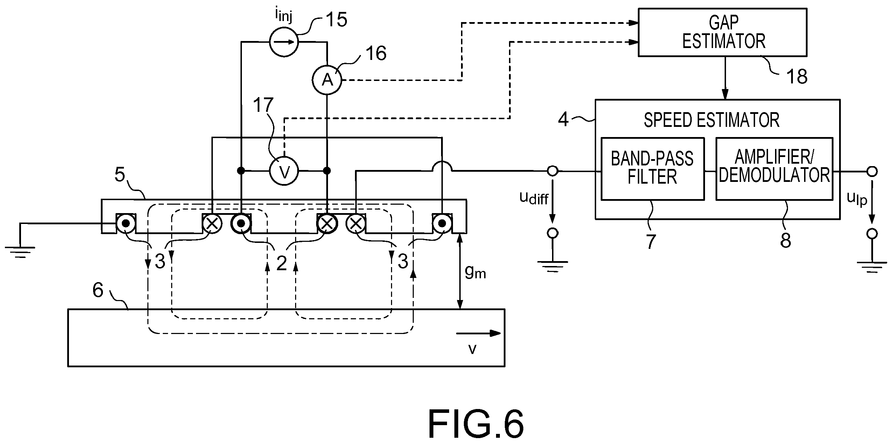

Fig. 6 is a view explaining the speed detecting device 1 according to this embodiment. The speed detecting device 1 in Fig. 6 is provided with the excitation coil 2 and the detection coils 3 disposed at the periphery of the yoke 5, the speed estimation portion 4, an ammeter 16 that measures the alternating current iinj flowing through the excitation coil 2, a voltmeter 17 that measures a voltage across the excitation coil 2, and a gap estimation portion 18. The ammeter 16 and the voltmeter 17 in combination constitute a current/voltage measurement portion.

As the arrangements of the excitation coil 2 and the detection coils 3, any of the above-mentioned arrangements shown in Fig. 1, Fig. 3, Fig. 5A, and Fig. 5B or any other arrangement may be adopted. Fig. 6 shows, as the simplest configuration, an example in which the excitation coil 2 is disposed in the middle, and the two detection coils 3 are disposed on both sides thereof. Also in a case shown in Fig. 6, a magnetic flux is generated by the alternating current iinj flowing through the excitation coil 2, and by this magnetic flux, an eddy current is generated on the relative moving body 6. When the relative moving body 6 moves in this state, another eddy current is generated on the relative moving body 6, and a magnetic flux produced by this eddy current are linked with the two detection coils 3. The magnetic fluxes linked with one of the two detection coils 3 are different in magnitude from the magnetic fluxes linked with the other detection coil 3, and thus there also occurs a difference between induced voltages induced in the two detection coils 3. Based on the difference voltage udiff between these induced voltages, the speed estimation portion 4 estimates the moving speed of the relative moving body 6.

Furthermore, a current flowing through the excitation coil 2 as the relative moving body 6 moves is measured with the ammeter 16, and a voltage across the excitation coil 2 is measured with the voltmeter 17. The current and the voltage thus measured are inputted to the gap estimation portion 18. Based on the current and the voltage measured, the gap estimation portion 18 estimates the gap between the conductor and the excitation coil 2. That is, based on the current flowing through the excitation coil 2 and the voltage across the excitation coil 2, the gap estimation portion 18 estimates the gap between the relative moving body 6 and the excitation coil 2.

The gap estimation portion 18 estimates the gap by an impedance analysis technique. More specifically, the gap estimation portion 18 estimates the gap based on a comparison between an inductance of the excitation coil 2 calculated based on a .current flowing through the excitation coil 2 and a voltage across the excitation coil 2 and an inductance of the excitation coil 2 corresponding to a preset reference value of the gap. Alternatively, the gap estimation portion 18 estimates the gap based on a comparison between an impedance of the excitation coil 2 calculated based on a current flowing through the excitation coil 2 and a voltage across the excitation coil 2 and an impedance of the excitation coil corresponding to a preset reference value of the gap. Alternatively, the gap estimation portion 18 may estimate the gap based on a phase difference between a current and a voltage of the excitation coil 2. A detailed operational principle of the gap estimation portion 18 can be optimized depending on a material of the relative moving body 6. For example, simple impedance analysis is used in a case where the relative moving body 6 is formed of a ferromagnetic material (for example, iron) having a high magnetic permeability. Here, assuming that a magnetic permeability of each of the relative moving body 6 and the yoke 5 is infinite, an inductance Lic of the excitation coil 2 depends on the gap and is expressed by, for example, a function Lic = f(g). In a case where the gap is small, dependence between the inductance Lic and the gap is expressed by a formula (1) below.

[Formula 1]

$$L_{ic} \cong L_{ic,nom} \frac{g_{nom}}{g} \qquad \cdots (1)$$

In the formula (1), Lic indicates an inductance of the excitation coil 2 in a case of a gap g, and Lic,nom indicates a reference inductance of the excitation coil 2 in a case of a reference gap gnom.

In a more precise analysis, Lic,nom can be determined from an electromagnetic field simulation or actual measurement performed in an actual system. Furthermore, Lic can be determined also by using a look-up table.

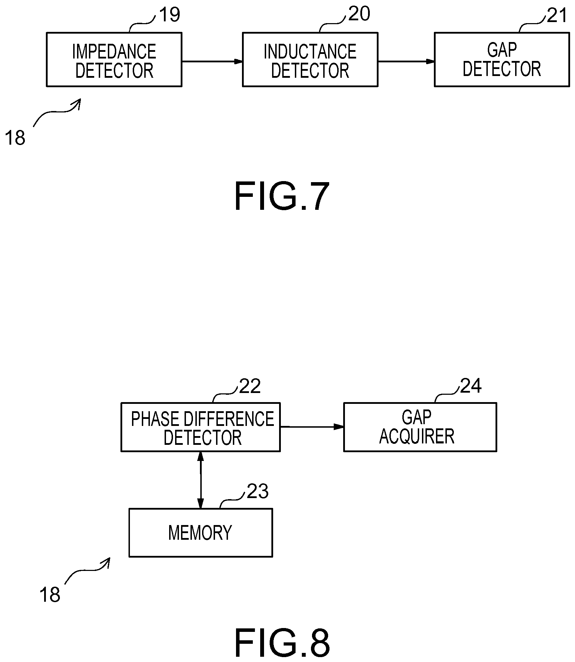

Fig. 7 is a block diagram showing an internal configuration of the gap estimation portion 18 in a case where the relative moving body 6 is formed of a magnetic material. The gap estimation portion 18 in Fig. 7 includes an impedance detection portion 19, an inductance detection portion 20, and a gap detection portion 21.

Based on a current measured with the ammeter 16 and a voltage measured with the voltmeter 17, the impedance detection portion 19 detects an impedance of the excitation coil 2. In more detail, by using a waveform of a voltage across the excitation coil 2 and a waveform of the alternating current iinj flowing through the excitation coil 2, an impedance is expressed by a formula (2) below.

[Formula 2]

$$\text{Impedance} = \text{Voltage Waveform/Current Waveform} \quad ... \quad (2)$$

Based on an impedance detected by the impedance detection portion 19, the inductance detection portion 20 detects an inductance of the excitation coil 2. In more detail, by using an impedance of the excitation coil 2 determined by the formula (2), a resistance component of the excitation coil 2, and an angular velocity $\omega$, an inductance is determined by a formula (3) below.

[Formula 3]

$$\text{Inductance} = (\text{Impedance - Resistance Component})/j\omega \quad ... \quad (3)$$

Based on an inductance detected by the inductance detection portion 20 and an inductance of the excitation coil 2 in a case where a distance between the conductor and the excitation coil 2 corresponds to a preset reference gap, the gap detection portion 21 detects the gap. More specifically, the gap detection portion 21 may calculate a corresponding gap by substituting an inductance determined by the formula (3) into the above-mentioned formula (1). Alternatively, the gap detection portion 21 may detect a corresponding gap by a method in which a look-up table recording a correlation between an inductance and the gap is prepared beforehand, and an inductance determined by the formula (3) is applied to this table.

On the other hand, in a case where the relative moving body 6 is formed of a non-magnetic material such as aluminum, a relationship of the above-mentioned formula (1) is no longer established. The reason for this is that, in the case where the relative moving body 6 is formed of a non-magnetic material, it is conceived that a value of an inductance hardly changes even when the gap varies. In the case where the gap is small, however, magnetic coupling between the excitation coil 2 and the relative moving body 6 is enhanced, and thus an eddy current generated on a surface of the relative moving body 6 is increased, so that a resistance component in the formula (3) is increased to decrease a phase difference between a voltage and a current of the excitation coil 2. Therefore, in the case where the relative moving body 6 is formed of a non-magnetic material, the moving speed of the relative moving body 6 is estimated by using a phase difference between a voltage and a current of the excitation coil 2.

Fig. 8 is a block diagram showing an internal configuration of the gap estimation portion 18 in the case where the relative moving body 6 is formed of a non-magnetic material. The gap estimation portion 18 in Fig. 8 includes a phase difference detection portion 22, a storage portion 23, and a gap acquisition portion 24.

Based on a current measured with the ammeter 16 and a voltage measured with the voltmeter 17, the phase difference detection portion 22 detects a phase difference between the current and the voltage.

The storage portion 23 stores a correlation between the gap and the phase difference. The gap acquisition portion 24 acquires, from the storage portion 23, a gap corresponding to the phase difference detected by the phase difference detection portion 22. The gap acquisition portion 24 may measure a gap corresponding to the phase difference by using a correlation function between the phase difference and the gap.

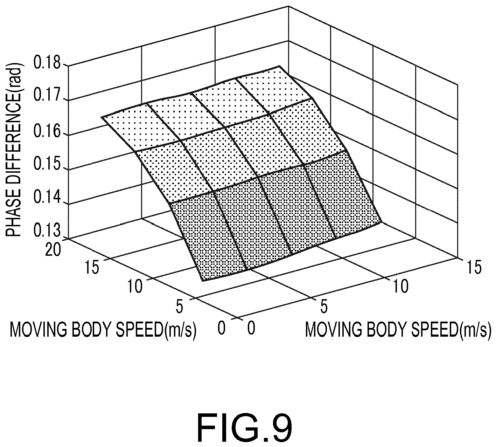

Fig. 9 is a graph showing a correlation among the phase difference between a voltage across the excitation coil 2 and a current flowing through the excitation coil 2, the gap, and the moving speed of the relative moving body 6. The graph of Fig. 9 represents a characteristic of the speed detecting device 1 in a case where, as the alternating current iinj, an alternating current having an effective current of 250 mA and a frequency of 250 Hz is continuously passed through the excitation coil 2. As can be understood from the graph of Fig. 9, the correlation between the phase difference and the gap hardly affects the moving speed of the relative moving body 6. Thus, the gap can be determined from the phase difference regardless of a magnitude of the moving speed of the relative moving body 6.

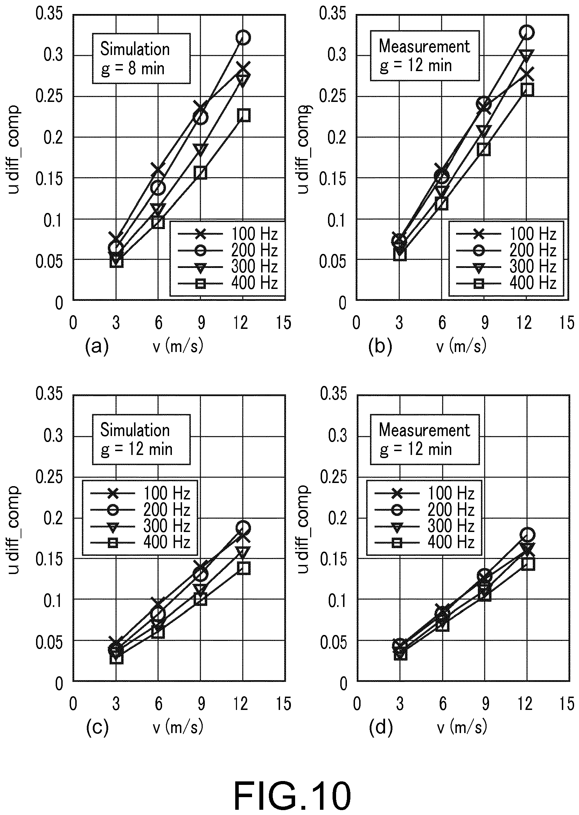

Fig. 10 shows graphs showing how a correlation between the difference voltage udiff and the moving speed changes depending on the gap. In each of the graphs, a horizontal axis indicates the moving speed v(m/s) of the relative moving body 6, and a vertical axis indicates the difference voltage udiff (V) between respective induced voltages in the detection coils 3. Part (a) and Part (b) of Fig. 10 each show a graph in a case where the gap g = 8 mm, and Part (c) and Part (d) of Fig. 10 each show a graph in a case where the gap g = 12 m. Part (a) and Part (c) of Fig. 10 each show a graph of values obtained by a simulation, and Part (c) and Part (d) of FIG. 10 each show a graph of actual measurement values. The drawings each show a graph in a case where, as the alternating current iinj, alternating currents having four different values of an excitation frequency finv (= 100 Hz, 200 Hz, 300 Hz, 400 Hz) are passed through the excitation coil 2.

As can be understood from Part (a) to Part (d) of Fig. 10, when the moving speed v = 12m/s and finv = 100 Hz, non-linear responsiveness is enhanced. This indicates that an excitation frequency needs to be selected in consideration of a maximum speed to be measured. Furthermore, it can also be understood that there is an optimum value of the excitation frequency. For example, with the excitation frequency exceeding 200 Hz, conceivably, detection sensitivity is decreased due to a skin effect of the relative moving body 6.

As can be seen from Part (a) to Part (d) of Fig. 10, an average deviation between a simulation result and an actual measurement value is 10% or lower. This deviation is caused by an error resulting from three-dimensional modeling, an error between electrical characteristics and a shape resulting from modeling of the relative moving body 6, or the like.

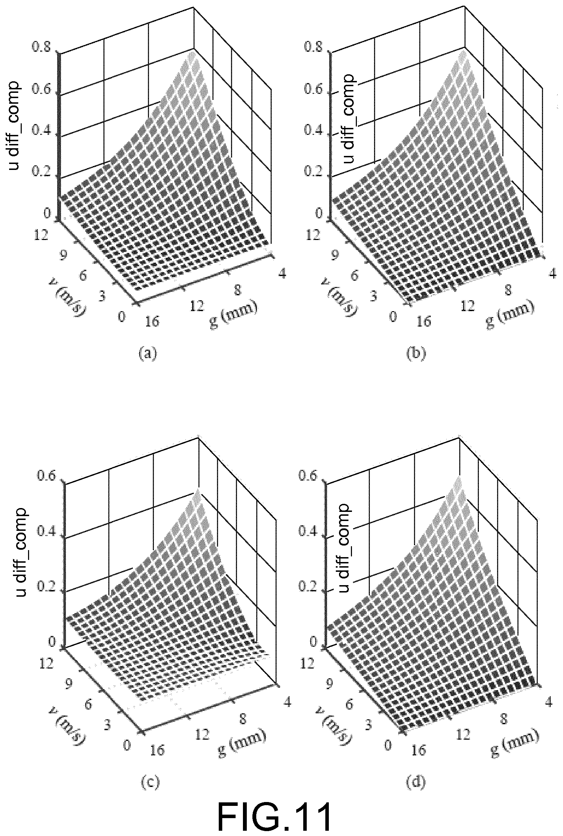

Part (a) to Part (d) of Fig. 11 are views showing an effect of the gap g related to a measurement value udiff,amp of the difference voltage udiff, illustrating a correlation diagram among the difference voltage udiff, the gap, and the moving speed. Part (a) and Part (b) of Fig. 11 each show a correlation diagram in a case where the excitation frequency finj = 200 Hz, and Part (c) and Part (d) of Fig. 11 each show a correlation diagram in a case where the excitation frequency finj = 400 Hz. Part (a) and Part (c) of Fig. 11 each show a correlation diagram in a case where an offset correction is not performed, and Part (b) and Part (d) of Fig. 11 each show the correlation diagram in a case where an offset correction is performed.

Here, an offset refers to a state where even though the relative moving body 6 is stopped, the difference voltage udiff between respective induced voltages in the detection coils 3 has a voltage value other than zero. Such an offset occurs due to the fact that the detection coils 3 on both sides of the excitation coil 2 are not in a completely symmetric structure. An offset can be eliminated by subtracting, in a time domain, a value of the difference voltage udiff obtained when the relative moving body 6 is stopped. This process is referred to as an offset correction.

As shown in Part (b) and Part (d) of Fig. 11, by performing the offset correction, the difference voltage udiff can be set to 0 V when the relative moving body 6 is stopped.

With respect to each of a plurality of gaps, the speed estimation portion 4 prepares beforehand a look-up table indicating a correlation between the difference voltage udiff between respective induced voltages in the detection coils 3 and the moving speed of the relative moving body 6 and applies the difference voltage udiff to one of the look-up tables corresponding to a gap estimated by the gap estimation portion 18, thus obtaining a corresponding value of the moving speed. Alternatively, with respect to each of a plurality of gaps, the speed estimation portion 4 determines in advance a correlation between the difference voltage udiff and the moving speed and applies the difference voltage udiff to one of the correlations corresponding to a gap estimated by the gap estimation portion 18, thus calculating the moving speed.

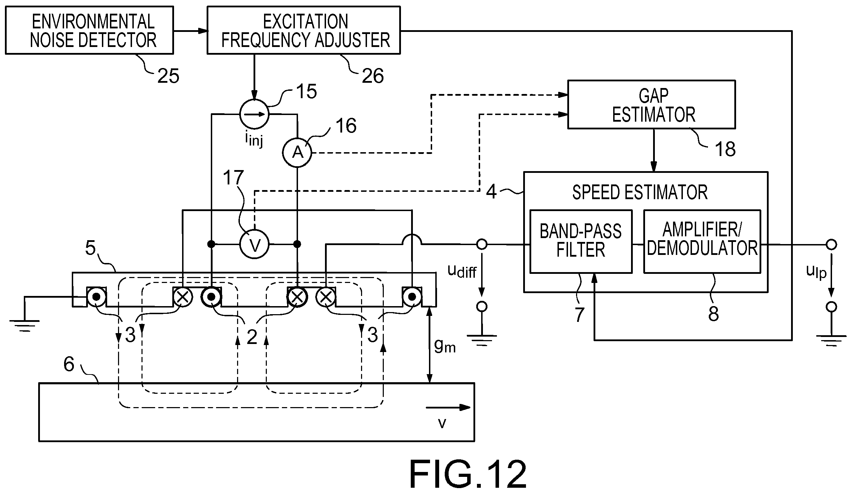

As one modification example of the speed detecting device 1 in Fig. 6, an excitation frequency may be switched depending on environmental noise detected . Fig. 12 is a view showing one modification example of the speed detecting device 1 in Fig. 6. In addition to the configuration of Fig. 6, a speed detecting device 1 in Fig. 12 is provided further with an environmental noise detection portion 25 and an excitation frequency adjustment portion 26.

By using a piezoelectric element, an acceleration sensor, or the like, the environmental noise detection portion 25 detects environmental noise in a vicinity of the speed detecting device 1. Various techniques are available for detecting environmental noise, and any of such techniques may be adopted. For example, a noise component may be estimated from respective induced voltages in the detection coils 3. The excitation frequency adjustment portion 26 adjusts an excitation frequency of the excitation coil 2 so that the excitation frequency is different from a frequency band of environmental noise detected. Furthermore, the excitation frequency adjustment portion 26 also adjusts a pass frequency band of the band-pass filter 7 inside the speed estimation portion 4 so as to correspond to the excitation frequency thus adjusted.

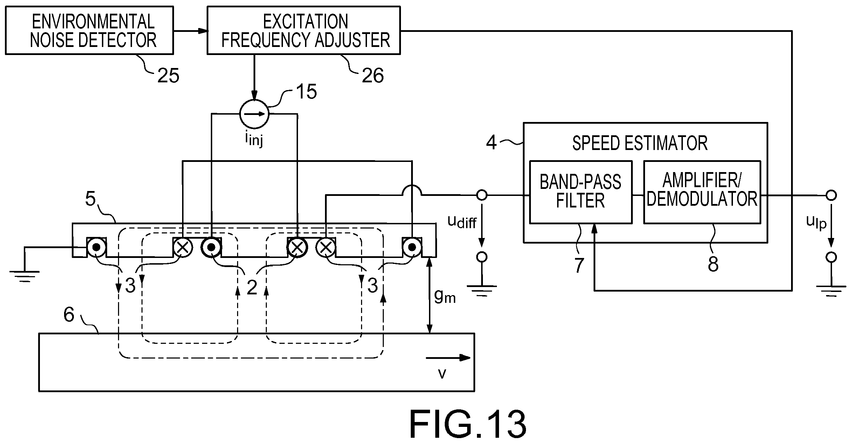

According to the speed detecting device 1 in Fig. 12, the moving speed of the relative moving body 6 is estimated by using, in addition to a result of estimating the gap, an excitation frequency not overlapping with a frequency band of environmental noise around the speed detecting device 1, and thus the moving speed can be accurately estimated without being affected by the environmental noise. As shown in Fig. 13, the gap estimation portion 18 may be omitted from the speed detecting device 1 in Fig. 12.

<Resonance Operation> Equivalently, the excitation coil 2 is an R-L series circuit. In order to excite a magnetic field in the gap and on the surface of the relative moving body 6, it is required that active power and reactive power be supplied to the excitation coil 2. Furthermore, it is desirable to use a sinusoidal current as the alternating current iinj to be passed through the excitation coil 2. The reason for this is that when a harmonic component is included in the alternating current iinj, the harmonic component is superimposed on induced voltages induced in the detection coils 3, acting as a noise component, and thus should be eliminated at the speed estimation portion 4.

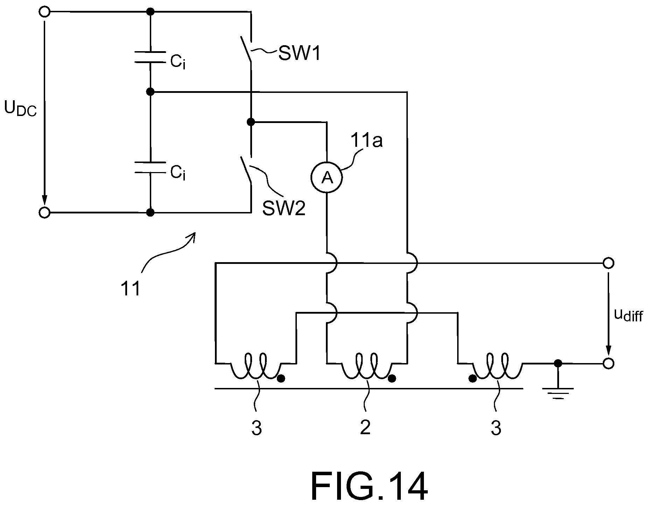

In view of the above, a resonance circuit (a first resonance circuit) 11 having the excitation coil 2 may be provided inside the speed detecting device 1. Fig. 14 is a circuit diagram showing one example of the resonance circuit 11. The resonance circuit 11 in Fig. 14 not only compensates for reactive power but also excites a sinusoidal current while minimizing a switching loss.

The resonance circuit 11 in Fig. 14 has two capacitors Ci connected in series between direct voltage terminals to which a direct voltage is supplied and two switches SW1 and SW2 also connected in series between the direct voltage terminals. One end of the excitation coil 2 is connected to a connection node between the capacitors Ci, and the other end of the excitation coil 2 is connected to a connection node between the switches SW1 and SW2 via an ammeter 11a.

The switches SW1 and SW2 in Fig. 14 are turned on/off alternately so as to correspond to a resonance frequency of the resonance circuit 11. Fig. 14 omits a circuit that switches on/off of the switches SW1 and SW2. In Fig. 14, a frequency of the alternating current iinj flowing through the excitation coil 2 is a resonance frequency of the resonance circuit 11.

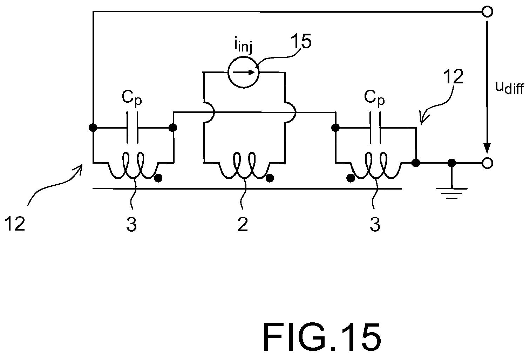

Fig. 15 is a view in which in addition to a circuit configuration in Fig. 14, the detection coils 3 are each also formed in a resonance circuit configuration. In Fig. 15, a capacitor Cp is connected in parallel to each of the two detection coils 3.

Each of the detection coils 3 and the capacitor Cp are connected in parallel to each other, thus constituting a resonance circuit (a second resonance circuit) 12. An inductance of each of the detection coils 3 and the capacitor Cp connected thereto are set in advance so that an excitation current frequency of the excitation coil 2 and a resonance frequency of the resonance circuit 12 agree with each other, and thus detection sensitivity with respect to respective induced voltages in the detection coils 3 having a frequency equal to the excitation current frequency used for speed estimation can be increased, so that it is possible to suppress detection of disturbance noise having a frequency different from the resonance frequency.

There is no particular limitation on a range to which the speed detecting device 1 according to this embodiment is applied. In a case, however, where the speed detecting device 1 according to this embodiment is used to detect, for example, a speed of a train, it is required to prevent a detection result from being affected by noise caused by vibrations of the train. It is desirable to check beforehand an average vibration frequency band of the train and set a resonance frequency of the resonance circuit 11 in Fig. 14 or the resonance circuit 12 in Fig. 15 to a frequency uncorrelated with this frequency band. By using the term "uncorrelated", it is intended that the resonance frequency be set so as not to overlap with not only a vibration frequency of the train but also a harmonic frequency thereof. Alternatively, as will be mentioned later, a configuration may be adopted in which environmental noise is detected at all times, and the resonance frequency of each of the resonance circuits 11 and 12 is set to a frequency uncorrelated with a frequency of the noise thus detected.

Furthermore, it is desirable that the alternating current iinj to be passed through the excitation coil 2 is set to have a most ideal possible sinusoidal waveform so that a harmonic component of the alternating current iinj is prevented from being superimposed on induced voltages induced in the detection coils 3. The alternating current iinj can be set to have an ideal sinusoidal waveform by using the resonance circuit 11 in Fig. 14.

The speed detecting device 1 according to this embodiment may be provided with both or either of the resonance circuit 11 in Fig. 14 and the resonance circuit 12 in Fig. 15. These resonance circuits 11 and 12 are applicable to any of the above-mentioned speed detecting devices 1 shown in Fig. 1, Fig. 3, Fig. 5A, Fig. 5B, Fig. 7, and Fig. 9 to Fig. 15.

<Intermittent Driving of Excitation Coil 2> In the speed detecting device 1 according to this embodiment, it is desirable to take measures against three types of losses in total, which are a core loss in the yoke 5, a copper loss in the excitation coil 2, and an eddy current loss on the relative moving body 6. The core loss in the yoke 5 can be minimized by using a low-loss yoke material such as ferrite, iron powder, or a laminated steel plate. On the other hand, the copper loss in the excitation coil 2 and the eddy current loss on the relative moving body 6 are essential elements of the speed detecting device 1 and thus are inevitable. In particular, as the gap increases in size, a current required for the exciting coil 2 increases, and the copper loss in the exciting coil 2 also increases. This may result in difficulty in applying to a case where the speed of the relative moving body 6 with a large gap is estimated by utilizing a battery power source.

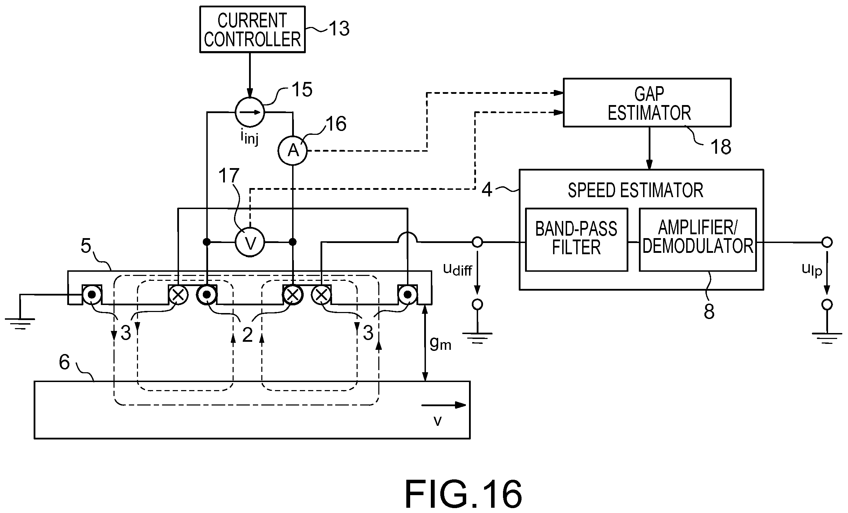

As one technique for reducing power consumption of the speed detecting device 1, the excitation coil 2 may be driven intermittently. Fig. 16 is a view showing a speed detecting device 1 obtained by adding a current control portion 13 to the configuration of Fig. 1. The current control portion 13 alternately provides a first period in which a current is passed through the excitation coil 2 and a second period in which no current is passed therethrough. The speed estimation portion 4 estimates the moving speed of the relative moving body 6, and the first period is set so that it is equal to or longer than a length of time required for the speed estimation portion 4 to estimate the moving speed of the relative moving body 6.

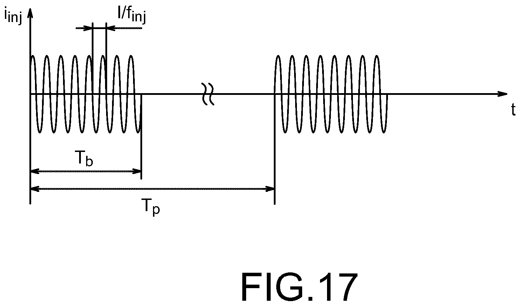

Fig. 17 is a waveform diagram of the alternating current iinj flowing through the excitation coil 2. The alternating current iinj is an intermittent current having a cycle Tp. The current control portion 13 passes the alternating current iinj having a predetermined frequency through the excitation coil 2 only during a first period Tb within the cycle Tp. Immediately after a start of the first period Tb, overshoot or undershoot might occur in a current waveform, rendering an alternating current waveform unstable.

For this reason, the moving speed of the relative moving body 6 may be estimated after a lapse of a predetermined time from the start of the first period Tb (in a period Tc in Fig. 17).

The current control portion 13 in Fig. 16 is applicable to any of the above-mentioned speed detecting devices 1 shown in Fig. 1, Fig. 3, Fig. 5A, Fig. 5B, Fig. 6, Fig. 12, and Fig. 13.

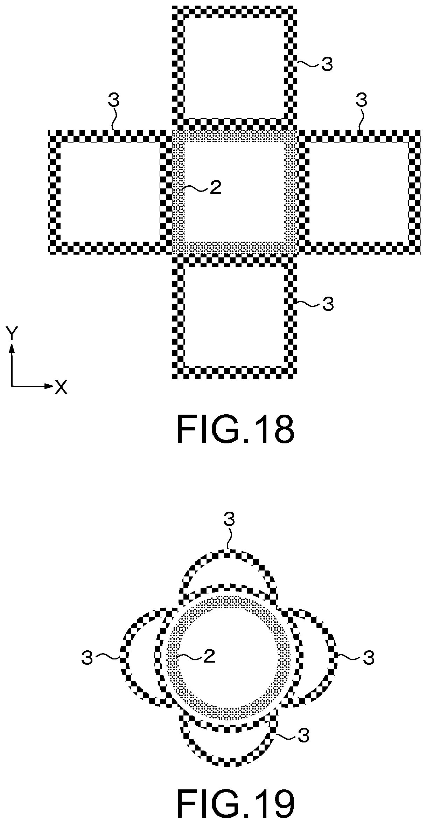

While the foregoing embodiment has described an example of detecting the speed of the relative moving body 6 moving in one direction, it is also possible to configure the speed detecting device 1 so that it is capable of detecting the speed of the relative moving body 6 moving in a two-dimensional direction. Fig. 18 is a schematic plan view, as seen from above, of a speed detecting device 1 capable of detecting the speed of the relative moving body 6 moving in a two-dimensional direction. An excitation coil 2 is disposed in the center, and detection coils 3 are disposed on both sides of the excitation coil 2 in a first direction X and on both sides thereof in a second direction Y intersecting the first direction X. In the speed detecting device 1 in Fig. 18, a moving speed of the relative moving body 6 when moving in the first direction X and a moving speed of the relative moving body 6 when moving in the second direction Y can be estimated. An internal configuration of the speed detecting device 1 in Fig. 18 may be any of the above-mentioned internal configurations shown in Fig. 1, Fig. 3, Fig. 5A, Fig. 5B, Fig. 6, Fig. 12, Fig. 13, and Fig. 16.

While the coils 2 and 3 are formed in a rectangular shape in Fig. 18, a shape and a size of the coils are arbitrary. For example, Fig. 19 shows an example in which an excitation coil 2 in the center is formed in an annular shape and excitation coils 2 around that excitation coil 2 are formed in a crescent shape.

As thus described, in this embodiment, in a state where a magnetic flux is generated on the relative moving body 6 by the alternating current iinj flowing through the excitation coil 2, the relative moving body 6 is caused to move. A magnetic flux produced by an eddy current newly generated as a result of movement of the relative moving body 6 is linked with the detection coils 3 so that induced voltages are induced in the detection coils 3. Based on this induced voltages, the moving speed of the relative moving body 6 is estimated. Furthermore, in this embodiment, arrangements of the excitation coil 2 and the detection coils 3 are designed so as to prevent a magnetic flux generated by the excitation coil 2 from spreading to the outside of the speed detecting device 1. Thus, magnetic efficiency can be improved by suppressing a stray magnetic field, so that it is possible to accurately estimate the moving speed of the relative moving body 6 while achieving low power consumption.

Furthermore, the excitation coil 2 and the detection coils 3 are disposed in a two-dimensional direction as shown in Fig. 13 and Fig. 15, and thus spreading of a stray magnetic field to the two-dimensional direction can be suppressed.

Moreover, the excitation coil 2 is formed in a configuration of the resonance circuit 11, and thus a power source voltage for passing an excitation current (an alternating current) can be reduced to a low level, so that a high voltage generation circuit for an excitation current is no longer needed.

Furthermore, a reduced number of times of switching allows an excitation current to have a sinusoidal waveform. Furthermore, the detection coils 3 are each formed in a configuration of the resonance circuit 12, and thus a frequency component other than a resonance frequency can be suppressed, so that an S/N ratio can be improved. Furthermore, respective induced voltages in the detection coils 3 can be detected even with the use of a small excitation current, and thus it is possible to achieve improved detection sensitivity and reduced power consumption.

Furthermore, the alternating current iinj flowing through the excitation coil 2 is set to have a sinusoidal waveform, and thus a harmonic component of the alternating current iinj is prevented from being included in induced voltages induced in the detection coils 3, so that the moving speed of the relative moving body 6 can be accurately estimated.

Moreover, the alternating current iinj is supplied intermittently to the excitation coil 2, and thus power consumption of the speed detecting device 1 can be reduced.

As thus described, in this embodiment, in view of the fact that a result of estimating the moving speed of the relative moving body 6 varies depending on a size of the gap between the excitation coil 2 with the detection coils 3 and the relative moving body 6, first, the gap is estimated, and based on a correlation between the difference voltage udiff and the moving speed with respect to the gap, the moving speed is estimated. Thus, even when the gap varies, the moving speed of the relative moving body 6 can be accurately estimated.

Furthermore, in this embodiment, in estimating the gap, different estimation techniques are used depending on whether the relative moving body 6 is formed of a magnetic material or a non-magnetic material. Specifically, in a case where the relative moving body 6 is formed of a magnetic material, after an impedance is calculated from a current and a voltage of the excitation coil 2, an inductance is calculated from the impedance thus calculated, and then the inductance thus calculated is substituted into the formula (1) to estimate the gap. On the other hand, in a case where the relative moving body 6 is formed of a non-magnetic material, a phase different is detected from a current and a voltage of the excitation coil 2, and the gap is estimated based on a correlation between the phase difference and the gap. Thus, whether the relative moving body 6 is formed of a magnetic material or a non-magnetic material, the gap can be accurately estimated. Furthermore, since an optimum gap estimation technique varies depending on a material of the relative moving body 6, a gap distance, a size or a shape of the speed sensor, or the like, even when the relative moving body 6 is formed of a magnetic material, a phase difference between a current and a voltage of the excitation coil 2 can be utilized to estimate the gap.

A concept of the above-mentioned relative moving body 6 in this embodiment includes not only a relative moving body that itself moves or rotates but also a relative moving body that moves relative to the speed detecting device 1. Therefore, in this embodiment, in a case where the speed detecting device 1 is installed in a train or the like, a fixture such as a rail that moves relative to the train or the like is also construed as being included in the concept of the relative moving body 6. The relative moving body 6 in this embodiment is a conductor.

**Claims**

1. A speed detecting device (1), comprising:

   an excitation coil (2) for generating a magnetic flux corresponding to an alternating current; and
   a plurality of detection coils (3), each of the plurality of detection coils (3) adapted to generate an induced voltage corresponding to a magnetic flux produced by an eddy current generated on a conductive relative moving body (6) formed of a magnetic material, the eddy current being generated so as to correspond to a moving speed of the relative moving body (6) moving through the magnetic flux generated by the excitation coil (2),
   **characterized by** further comprising:

   a gap estimation portion (18) adapted to estimate, based on a current ($i_{inj}$) flowing through the excitation coil (2) and a voltage across the excitation coil (2), a gap (g) between the relative moving body (6) and the excitation coil (2); and
   a speed estimation portion adapted to estimate, based on the gap (g) estimated by the gap estimation portion (18) and the induced voltage generated in each of the plurality of detection coils, the moving speed of the relative moving body (6),
   wherein the gap estimation portion (18) is configured to estimate the gap (g) based on a comparison between an inductance ($L_{ic}$) or an impedance of the excitation coil (2) calculated based on the current ($i_{inj}$) and the voltage, and a known reference inductance ($L_{ic,nom}$) or a known reference impedance of the excitation coil (2) corresponding to a preset reference value ($g_{nom}$) of the gap (g).

2. A speed detecting device (1), comprising:

   an excitation coil (2) for generating a magnetic flux corresponding to an alternating current; and
   a plurality of detection coils (3), each of the plurality of detection coils (3) adapted to generate an induced voltage corresponding to a magnetic flux produced by an eddy current generated on a conductive relative moving body (6) formed of a non-magnetic material, the eddy current being generated so as to correspond to a moving speed of the relative moving body (6) moving through the magnetic flux generated by the excitation coil (2),
   **characterized by** further comprising:

   a gap estimation portion (18) adapted to estimate, based on a current ($i_{inj}$) flowing through the excitation coil (2) and a voltage across the excitation coil (2), a gap (g) between the relative moving body (6) and the excitation coil (2); and
   a speed estimation portion adapted to estimate, based on the gap (g) estimated by the gap estimation portion (18) and the induced voltage generated in each of the plurality of detection coils, the moving speed of the relative moving body (6),
   wherein the gap estimation portion (18) is configured to estimate the gap (g) based on a phase difference between the current ($i_{inj}$) and the voltage.

3. The speed detecting device (1) according to claim 2, wherein

   the gap estimation portion (18) includes a storage portion (23) storing a correlation between the gap (g) and the phase difference, and
   the gap estimation portion (18) is configured to acquire, from the storage portion (23), a value of the gap (g) corresponding to the phase difference detected by the phase difference detection portion (22).

4. The speed detecting device (1) according to any one of claims 1 to 3, further comprising: a current control portion (13) for alternately providing a first period ($T_b$) in which a current ($i_{inj}$) is passed through the excitation coil (2) and a second period in which no current is passed therethrough and setting the first period ($T_b$) to be equal to or longer than a length of time required for the speed estimation portion (4) to estimate the moving speed of the relative moving body (6).

5. The speed detecting device (1) according to claim 4, wherein
the speed estimation portion (4) is configured to estimate the moving speed of the relative moving body (6) after a lapse of a predetermined time from a start of the first period ($T_b$).

6. A train, comprising the speed detecting device (1) according to any one of claims 1 to 5, wherein

    the relative moving body (6) is a wheel of a train, and
    the alternating current ($i_{inj}$) has a frequency different from a vibration frequency band of the train, wherein this vibration frequency band is determined beforehand as an average vibration frequency band of the train.

7. A speed detecting method, comprising the step of:

    causing each of a plurality of detection coils (3) to generate an induced voltage while a magnetic flux corresponding to an alternating current ($i_{inj}$) is generated by an excitation coil (2), the induced voltage corresponding to a magnetic flux produced by an eddy current generated on a conductive relative moving body (6) formed of a magnetic material, the eddy current being generated so as to correspond to a moving speed of the relative moving body (6) moving through the magnetic flux generated by the excitation coil (2),
    **characterized by** further comprising the steps of:

        estimating, based on a current ($i_{inj}$) flowing through the excitation coil (2) and a voltage across the excitation coil (2), a gap (g) between the relative moving body (6) and the excitation coil (2); and
        estimating, based on the gap (g) thus estimated and the induced voltage generated in each of the plurality of detection coils (3), the moving speed of the relative moving body (6),
        wherein the gap (g) is estimated based on a comparison between an inductance ($L_{ic}$) or an impedance of the excitation coil (2) calculated based on the current ($i_{inj}$) and the voltage, and a known reference inductance ($L_{ic,nom}$) or a known reference impedance of the excitation coil (2) corresponding to a preset reference value ($g_{nom}$) of the gap (g).

8. A speed detecting method, comprising the step of:

    causing each of a plurality of detection coils (3) to generate an induced voltage while a magnetic flux corresponding to an alternating current ($i_{inj}$) is generated by an excitation coil (2), the induced voltage corresponding to a magnetic flux produced by an eddy current generated on a conductive relative moving body (6) formed of a non-magnetic material, the eddy current being generated so as to correspond to a moving speed of the relative moving body (6) moving through the magnetic flux generated by the excitation coil (2),
    **characterized by** further comprising the steps of:

        estimating, based on a current ($i_{inj}$) flowing through the excitation coil (2) and a voltage across the excitation coil (2), a gap (g) between the relative moving body (6) and the excitation coil (2); and
        estimating, based on the gap (g) thus estimated and the induced voltage generated in each of the plurality of detection coils (3), the moving speed of the relative moving body (6),
        wherein the gap (g) is estimated based on a phase difference between the current ($i_{inj}$) and the voltage.

**Patentansprüche**

1. Geschwindigkeits-Erfassungsvorrichtung (1), die umfasst:

    eine Erregerspule (2) zum Erzeugen eines Magnetflusses, der einem Wechselstrom entspricht; sowie
    eine Vielzahl von Erfassungsspulen (3), wobei jede der Vielzahl von Erfassungsspulen (3) so eingerichtet ist, dass sie eine induzierte Spannung erzeugt, die einem Magnetfluss entspricht, der durch einen Wirbelstrom erzeugt wird, der an einem leitenden, sich relativ bewegenden Körper (6) erzeugt wird, der aus einem magnetischen Material besteht, wobei der Wirbelstrom so erzeugt wird, dass er einer Bewegungsgeschwindigkeit des sich relativ bewegenden Körpers (6) entspricht, der sich durch den von der Erregerspule (2) erzeugten Magnetfluss hindurch bewegt,
    **dadurch gekennzeichnet, dass** sie des Weiteren umfasst:

        einen Abschnitt (18) für Schätzung eines Spalts, der so eingerichtet ist, dass er auf Basis eines durch die Erregerspule (2) fließenden Stroms ($i_{inj}$) und einer Spannung über die Erregerspule (2) einen Spalt (g) zwischen dem sich relativ bewegenden Körper (6) und der Erregerspule (2) schätzt; sowie einen Abschnitt für Schätzung von Geschwindigkeit, der so eingerichtet ist, dass er auf Basis des von dem Abschnitt (18) für Schätzung eines Spalts geschätzten Spalts (g) und der in jeder der Vielzahl von Erfassungsspulen erzeugten induzierten Spannung die Bewegungsgeschwindigkeit des sich relativ bewegenden Körpers (6) schätzt,

wobei der Abschnitt (18) für Schätzung eines Spalts so ausgeführt ist, dass er den Spalt (g) auf Basis eines Vergleichs zwischen einer Induktivität ($L_{ic}$) oder einer Impedanz der Erregerspule (2), die auf Basis des Stroms ($i_{inj}$) berechnet wird, und der Spannung sowie einer bekannten Bezugs-Induktivität ($L_{ic,nom}$) oder einer bekannten Bezugs-Impedanz der Erregerspule (2) entsprechend einem voreingestellten Bezugswert ($g_{nom}$) des Spalts (g) schätzt.

2. Geschwindigkeits-Erfassungsvorrichtung (1), die umfasst:

eine Erregerspule (2) zum Erzeugen eines Magnetflusses, der einem Wechselstrom entspricht; sowie eine Vielzahl von Erfassungsspulen (3), wobei jede der Vielzahl von Erfassungsspulen (3) so eingerichtet ist, dass sie eine induzierte Spannung erzeugt, die einem Magnetfluss entspricht, der durch einen Wirbelstrom erzeugt wird, der an einem leitenden, sich relativ bewegenden Körper (6) erzeugt wird, der aus einem nichtmagnetischen Material besteht, wobei der Wirbelstrom so erzeugt wird, dass er einer Bewegungsgeschwindigkeit des sich relativ bewegenden Körpers (6) entspricht, der sich durch den von der Erregerspule (2) erzeugten Magnetfluss hindurch bewegt,

**dadurch gekennzeichnet, dass** sie des Weiteren umfasst:

einen Abschnitt (18) für Schätzung eines Spalts, der so eingerichtet ist, dass er auf Basis eines durch die Erregerspule (2) fließenden Stroms ($i_{inj}$) und einer Spannung über die Erregerspule (2) einen Spalt (g) zwischen dem sich relativ bewegenden Körper (6) und der Erregerspule (2) schätzt; sowie einen Abschnitt für Schätzung von Geschwindigkeit, der so eingerichtet ist, dass er auf Basis des von dem Abschnitt (18) für Schätzung eines Spalts geschätzten Spalts (g) und der in jeder der Vielzahl von Erfassungsspulen erzeugten induzierten Spannung die Bewegungsgeschwindigkeit des sich relativ bewegenden Körpers (6) schätzt,

wobei der Abschnitt (18) für Schätzung eines Spalts so ausgeführt ist, dass er den Spalt (g) auf Basis einer Phasendifferenz zwischen dem Strom ($i_{inj}$) und der Spannung schätzt.

3. Geschwindigkeits-Erfassungsvorrichtung (1) nach Anspruch 2, wobei der Abschnitt (18) für Schätzung eines Spalts einen Speicherabschnitt (23) enthält, der eine Korrelation zwischen dem Spalt (g) und der Phasendifferenz speichert, und der Abschnitt (18) für Schätzung eines Spalts so ausgeführt ist, dass er aus dem Speicherabschnitt (23) einen Wert des Spalts (g) abruft, der der durch den Abschnitt (22) für Erfassung einer Phasendifferenz erfassten Phasendifferenz entspricht.

4. Geschwindigkeits-Erfassungsvorrichtung (1) nach einem der Ansprüche 1 bis 3, die des Weiteren umfasst: einen Abschnitt (13) für Strom-Steuerung, mit dem abwechselnd eine erste Periode ($T_b$), in der ein Strom ($i_{inj}$) durch die Erregerspule (2) geleitet wird, und eine zweite Periode erzeugt werden, in der kein Strom durch sie geleitet wird, und die erste Periode ($T_b$) so eingestellt wird, dass sie genauso lang ist wie oder länger als eine Zeitdauer, die der Abschnitt (4) für Schätzung von Geschwindigkeit benötigt, um die Bewegungsgeschwindigkeit des sich relativ bewegenden Körpers (6) zu schätzen.

5. Geschwindigkeits-Erfassungsvorrichtung (1) nach Anspruch 4, wobei der Abschnitt (4) für Schätzung von Geschwindigkeit so ausgeführt ist, dass er die Bewegungsgeschwindigkeit des sich relativ bewegenden Körpers (6) nach Ablauf einer vorgegebenen Zeit von einem Beginn der ersten Periode ($T_b$) an schätzt.

6. Zug, der die Geschwindigkeits-Erfassungsvorrichtung (1) nach einem der Ansprüche 1 bis 5 umfasst, wobei

der sich relativ bewegende Körper (6) ein Rad eines Zuges ist, und der Wechselstrom ($i_{inj}$) eine Frequenz hat, die sich von einem Vibrations-Frequenzband des Zuges unterscheidet, wobei dieses Vibrations-Frequenzband im Voraus als ein durchschnittliches Vibrations-Frequenzband des Zuges bestimmt wird.

**7.** Geschwindigkeits-Erfassungsverfahren, das den folgenden Schritt umfasst:

Veranlassen, dass jede einer Vielzahl von Erfassungsspulen (3) eine induzierte Spannung erzeugt, während ein Magnetfluss, der einem Wechselstrom ($i_{inj}$) entspricht, durch eine Erregerspule (2) erzeugt wird, wobei die induzierte Spannung einem Magnetfluss entspricht, der durch einen Wirbelstrom erzeugt wird, der an einem leitenden, sich relativ bewegenden Körper (6) erzeugt wird, der aus einem magnetischen Material besteht, und der Wirbelstrom so erzeugt wird, dass er einer Bewegungsgeschwindigkeit des sich relativ bewegenden Körpers (6) entspricht, der sich durch den von der Erregerspule (2) erzeugten Magnetfluss hindurch bewegt, **dadurch gekennzeichnet, dass** es des Weiteren die folgenden Schritte umfasst:

Schätzen eines Spalts (g) zwischen dem sich relativ bewegenden Körper (6) und der Erregerspule (2) auf Basis eines durch die Erregerspule (2) fließenden Stroms ($i_{inj}$) und einer Spannung über die Erregerspule (2); sowie
Schätzen der Bewegungsgeschwindigkeit des sich relativ bewegenden Körpers (6) auf Basis des so geschätzten Spalts (g) und der in jeder der Vielzahl von Erfassungsspulen (3) erzeugten induzierten Spannung, wobei der Spalt (g) auf Basis eines Vergleichs zwischen einer Induktivität ($L_{ic}$) oder einer Impedanz der Erregerspule (2), die auf Basis des Stroms ($i_{inj}$) berechnet wird, und der Spannung sowie einer bekannten Bezugs-Induktivität ($L_{ic,nom}$) oder einer bekannten Bezugs-Impedanz der Erregerspule (2) entsprechend einem voreingestellten Bezugswert ($g_{nom}$) des Spalts (g) geschätzt wird.

**8.** Geschwindigkeits-Erfassungsverfahren, das die folgenden Schritte umfasst:

Veranlassen, dass jede einer Vielzahl von Erfassungsspulen (3) eine induzierte Spannung erzeugt, während ein einem Wechselstrom ($i_{inj}$) entsprechender magnetischer Fluss durch eine Erregerspule (2) erzeugt wird, wobei die induzierte Spannung einem Magnetfluss entspricht, der durch einen Wirbelstrom erzeugt wird, der an einem leitenden, sich relativ bewegenden Körper (6) erzeugt wird, der aus einem nichtmagnetischen Material besteht, und der Wirbelstrom so erzeugt wird, dass er einer Bewegungsgeschwindigkeit des sich relativ bewegenden Körpers (6) entspricht, der sich durch den von der Erregerspule (2) erzeugten Magnetfluss hindurch bewegt, **dadurch gekennzeichnet, dass** es des Weiteren die folgenden Schritte umfasst:

Schätzen eines Spalts (g) zwischen dem sich relativ bewegenden Körper (6) und der Erregerspule (2) auf Basis eines durch die Erregerspule (2) fließenden Stroms ($i_{inj}$) und einer Spannung über die Erregerspule (2); sowie
Schätzen der Bewegungsgeschwindigkeit des sich relativ bewegenden Körpers (6) auf Basis des so geschätzten Spalts (g) und der in jeder der Vielzahl von Erfassungsspulen (3) erzeugten induzierten Spannung, wobei der Spalt (g) auf Basis einer Phasendifferenz zwischen dem Strom ($i_{inj}$) und der Spannung geschätzt wird.

**Revendications**

**1.** Dispositif de détection de vitesse (1), comprenant :

une bobine d'excitation (2) pour générer un flux magnétique correspondant à un courant alternatif ; et
une pluralité de bobines de détection (3), chacune de la pluralité de bobines de détection (3) étant adaptée pour générer une tension induite correspondant à un flux magnétique produit par un courant de Foucault généré sur un corps en déplacement relatif (6) conducteur formé d'un matériau magnétique, le courant de Foucault étant généré de manière à correspondre à une vitesse de déplacement du corps en déplacement relatif (6) se déplaçant à travers le flux magnétique généré par la bobine d'excitation (2), **caractérisé en ce qu'**il comprend en outre :

une partie d'estimation d'intervalle (18) adaptée pour estimer, sur la base d'un courant ($i_{inj}$) circulant à travers la bobine d'excitation (2) et d'une tension aux bornes de la bobine d'excitation (2), un intervalle (g) entre le corps en déplacement relatif (6) et la bobine d'excitation (2) ; et
une partie d'estimation de vitesse adaptée pour estimer, sur la base de l'intervalle (g) estimé par la partie d'estimation d'intervalle (18) et de la tension induite générée dans chacune de la pluralité de bobines de détection, la vitesse de déplacement du corps en déplacement relatif (6),

dans lequel la partie d'estimation d'intervalle (18) est configurée pour estimer l'intervalle (g) sur la base d'une comparaison entre une inductance ($L_{ic}$) ou une impédance de la bobine d'excitation (2) calculée sur la base du courant ($i_{inj}$) et de la tension, et une inductance de référence connue ($L_{ic,nom}$) ou une impédance de référence connue de la bobine d'excitation (2) correspondant à une valeur de référence prédéfinie ($g_{nom}$) de l'intervalle (g).

2. Dispositif de détection de vitesse (1), comprenant :

 une bobine d'excitation (2) pour générer un flux magnétique correspondant à un courant alternatif ; et
 une pluralité de bobines de détection (3), chacune de la pluralité de bobines de détection (3) étant adaptée pour générer une tension induite correspondant à un flux magnétique produit par un courant de Foucault généré sur un corps en déplacement relatif (6) conducteur formé d'un matériau non magnétique, le courant de Foucault étant généré de manière à correspondre à une vitesse de déplacement du corps en déplacement relatif (6) se déplaçant à travers le flux magnétique généré par la bobine d'excitation (2),
 **caractérisé en ce qu'**il comprend en outre :

  une partie d'estimation d'intervalle (18) adaptée pour estimer, sur la base d'un courant ($i_{inj}$) circulant à travers la bobine d'excitation (2) et une tension aux bornes de la bobine d'excitation (2), un intervalle (g) entre le corps en déplacement relatif (6) et la bobine d'excitation (2) ; et
  une partie d'estimation de vitesse adaptée pour estimer, sur la base de l'intervalle (g) estimé par la partie d'estimation d'intervalle (18) et de la tension induite générée dans chacune de la pluralité de bobines de détection, la vitesse de déplacement du corps en déplacement relatif (6),
  dans lequel la partie d'estimation d'intervalle (18) est configurée pour estimer l'intervalle (g) sur la base d'une différence de phase entre le courant ($i_{inj}$) et la tension.

3. Dispositif de détection de vitesse (1) selon la revendication 2, dans lequel

 la partie d'estimation d'intervalle (18) comporte une partie de stockage (23) stockant une corrélation entre l'intervalle (g) et le différence de phase, et
 la partie d'estimation d'intervalle (18) est configurée pour acquérir, à partir de la partie de stockage (23), une valeur de l'intervalle (g) correspondant à la différence de phase détectée par la partie de détection de différence de phase (22).

4. Dispositif de détection de vitesse (1) selon l'une quelconque des revendications 1 à 3, comprenant en outre :
une partie de commande de courant (13) pour fournir alternativement une première période (Tb) dans laquelle un courant ($i_{inj}$) passe à travers la bobine d'excitation (2) et une deuxième période dans laquelle aucun courant ne passe à travers celle-ci, et définir la première période (Tb) pour qu'elle soit égale ou supérieure à une longueur de temps requise pour que la partie d'estimation de vitesse (4) estime la vitesse de déplacement du corps en déplacement relatif (6).

5. Dispositif de détection de vitesse (1) selon la revendication 4, dans lequel
la partie d'estimation de vitesse (4) est configurée pour estimer la vitesse de déplacement du corps en déplacement relatif (6) après un laps de temps prédéterminé à partir d'un début de la première période (Tb).

6. Train, comprenant le dispositif de détection de vitesse (1) selon l'une quelconque des revendications 1 à 5, dans lequel

 le corps en déplacement relatif (6) est une roue d'un train, et
 le courant ($i_{inj}$) alternatif a une fréquence différente d'une bande de fréquence de vibration du train, dans lequel cette bande de fréquence de vibration est déterminée au préalable comme une bande de fréquence de vibration moyenne du train.

7. Procédé de détection de vitesse, comprenant l'étape de :

 amener chacune d'une pluralité de bobines de détection (3) à générer une tension induite tandis qu'un flux magnétique correspondant à un courant ($i_{inj}$) alternatif est généré par une bobine d'excitation (2), la tension induite correspondant à un flux magnétique produit par un courant de Foucault généré sur un corps en déplacement relatif (6) conducteur formé d'un matériau magnétique, le courant de Foucault étant généré de manière à correspondre à une vitesse de déplacement du corps en déplacement relatif (6) se déplaçant à travers le flux magnétique généré par la bobine d'excitation (2),

**caractérisé en ce qu'**il comprend en outre les étapes :

d'estimation, sur la base d'un courant ($i_{inj}$) circulant à travers la bobine d'excitation (2) et d'une tension aux bornes de la bobine d'excitation (2), d'un intervalle (g) entre le corps en déplacement relatif (6) et la bobine d'excitation (2) ; et

d'estimation, sur la base de l'intervalle (g) ainsi estimé et de la tension induite générée dans chacune de la pluralité de bobines de détection (3), de la vitesse de déplacement du corps en déplacement relatif (6), dans lequel l'intervalle (g) est estimé sur la base d'une comparaison entre une inductance ($L_{ic}$) ou une impédance de la bobine d'excitation (2) calculée sur la base du courant ($i_{inj}$) et de la tension, et une inductance de référence connue ($L_{ic,nom}$) ou une impédance de référence connue de la bobine d'excitation (2) correspondant à une valeur de référence prédéfinie ($g_{nom}$) de l'intervalle (g).

8. Procédé de détection de vitesse, comprenant l'étape :

d'amener chacune d'une pluralité de bobines de détection (3) à générer une tension induite tandis qu'un flux magnétique correspondant à un courant ($i_{inj}$) alternatif est généré par une bobine d'excitation (2), la tension induite correspondant à un flux magnétique produit par un courant de Foucault généré sur un corps en déplacement relatif (6) conducteur formé d'un matériau non magnétique, le courant de Foucault étant généré de manière à correspondre à une vitesse de déplacement du corps en déplacement relatif (6) se déplaçant à travers le flux magnétique généré par la bobine d'excitation (2),

**caractérisé en ce qu'**il comprend en outre les étapes :

d'estimation, sur la base d'un courant ($i_{inj}$) circulant à travers la bobine d'excitation (2) et d'une tension aux bornes de la bobine d'excitation (2), d'un intervalle (g) entre le corps en déplacement relatif (6) et la bobine d'excitation (2) ; et

d'estimation, sur la base de l'intervalle (g) ainsi estimé et de la tension induite générée dans chacune de la pluralité de bobines de détection (3), de la vitesse de déplacement du corps en déplacement relatif (6), dans lequel l'intervalle (g) est estimé sur la base d'une différence de phase entre le courant ($i_{inj}$) et la tension.

FIG.1

6a

$$v_1 = 0 \text{ m/s}$$

6

# FIG.2A

$$v_2 > 0 \text{ m/s}$$

6

# FIG.2B

FIG.3

$u_{diff}$

W1($v_3$)

W1($v_2$)

W1($v_1$)

$\omega t$

# FIG.4A

$u_{lp}$

W2($v_3$)

W2($v_2$)

W2($v_1$)

$\omega t$

# FIG.4B

$i_{inj}$

W3

$\omega t$

$1/f_{inj}$

# FIG.4C

FIG.5A

FIG.5B

EP 3 450 988 B1

FIG.6

EP 3 450 988 B1

| IMPEDANCE DETECTOR 19 | → | INDUCTANCE DETECTOR 20 | → | GAP DETECTOR 21 |

18

# FIG.7

| PHASE DIFFERENCE DETECTOR 22 | → | GAP ACQUIRER 24 |

↕

| MEMORY 23 |

18

# FIG.8

FIG.9

FIG.10

FIG.11

FIG.12

ENVIRONMENTAL NOISE DETECTOR — 25

EXCITATION FREQUENCY ADJUSTER — 26

GAP ESTIMATOR — 18

SPEED ESTIMATOR — 4

AMPLIFIER/ DEMODULATOR — 8

BAND-PASS FILTER — 7

$I_{inj}$ — 15

A — 16

V — 17

$u_{lp}$

$u_{diff}$

$g_m$

v

2, 3, 5, 6

FIG.13

FIG.14

FIG.15

FIG.16

FIG.17

FIG.18

FIG.19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007078558 A
- JP H08211084 A
- DE 19538575 A1

- US 2012028859 A1
- JP H08233843 A
- JP H08146024 A

### Non-patent literature cited in the description

- **TUYUZ ARDA et al.** Eddy-current based contactless speed sensing of conductive surfaces. *IEEE 2nd Annual Southern Power Electronics Conference (SPEC),* 2016

- **HORST RUDOLF LOOS.** Function and computation of transducers for the contact free measurement of distance on the basis of the eddy current effect. *Technisches Messen ATM,* vol. 43 (7/8
- **TIM HITZ et al.** *True Position Measurement with Eddy Current Technology*